(19) Europäisches Patentamt / European Patent Office / Office européen des brevets

(11) **EP 4 261 722 B1**

(12) **EUROPÄISCHE PATENTSCHRIFT**

(45) Veröffentlichungstag und Bekanntmachung des Hinweises auf die Patenterteilung:
**27.05.2026   Patentblatt 2026/22**

(21) Anmeldenummer: **22168562.1**

(22) Anmeldetag: **14.04.2022**

(51) Internationale Patentklassifikation (IPC):
*G06F 21/60* ^(2013.01)   *G06F 21/64* ^(2013.01)
*H04L 9/32* ^(2006.01)   *G06F 21/57* ^(2013.01)
*H04L 9/08* ^(2006.01)

(52) Gemeinsame Patentklassifikation (CPC):
**G06F 21/64; G06F 21/57; G06F 21/602;
H04L 9/3234; H04L 9/3247**

(54) **AUSGEBEN EINER GEMEINSAMEN, KRYPTOGRAPHISCH GESCHÜTZTEN GERÄTEKONFIGURATIONSINFORMATION**

OUTPUT OF A SHARED CRYPTOGRAPHICALLY PROTECTED DEVICE CONFIGURATION INFORMATION

ÉMISSION DES INFORMATIONS DE CONFIGURATION D'APPAREIL COMMUNES; PROTÉGÉES DE MANIÈRE CRYPTOGRAPHIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**18.10.2023   Patentblatt 2023/42**

(73) Patentinhaber: **Siemens Aktiengesellschaft 80333 München (DE)**

(72) Erfinder:
• **Falk, Rainer 85586 Poing (DE)**
• **Fischer, Kai 85598 Baldham (DE)**
• **Heintel, Markus 81377 München (DE)**

• **Klasen, Wolfgang 85521 Ottobrunn (DE)**
• **Maftun, Aliza 81247 München (DE)**
• **Passarelli, Anne 80809 München (DE)**
• **Schneider, Daniel 80796 München (DE)**

(74) Vertreter: **Siemens Patent Attorneys Postfach 22 16 34 80506 München (DE)**

(56) Entgegenhaltungen:
**EP-A1- 3 591 559      EP-A1- 3 599 567
WO-A1-2020/185568**

# EP 4 261 722 B1

**Beschreibung**

HINTERGRUND DER ERFINDUNG

Gebiet der Erfindung

Die vorliegende Erfindung betrifft ein Verfahren zum Ausgeben einer gemeinsamen, kryptographisch geschützten Gerätekonfigurationsinformation von mindestens einer ersten Komponente eines Geräts und mindestens einer zweiten Komponente des Geräts. Die Erfindung betrifft außerdem ein Gerät zur Ausführung des Verfahrens.

Beschreibung des Stands der Technik

Der Schutz der Integrität und Authentizität von Komponenten, insbesondere einem Automatisierungsgerät, Steuergerät oder IoT-Gerät ist ein wesentliches Ziel, insbesondere wenn Komponenten in betriebskritischen cyber-physischen System oder Automatisierungssystemen eingesetzt werden.

Zum Schutz der Integrität einer einzelnen Komponente sind Verfahren wie Secure Boot bekannt, die durch hardwarebasierte Sicherheitselemente, auch Secure Elements, wie insbesondere ein Trusted Platform Module (TPM) unterstützt werden können. Ein TPM stellt eine spezielle API zum Aufbau von Hashketten zur Verfügung. Diese API erlaubt, sequenziell eine Reihe von Prüfsummen (insbesondere Fingerprints von Software oder Firmware, die zur Ausführung gelangt) in ein Platform Control Register (PCR) zu akkumulieren. Dies erfolgt über eine sogenannte PCR-Extend-Funktion:

$$PCR\_value\_new = hash\_func(PCR\_value\_old \mid digest)$$

Der Wert des PCRs kann einerseits genutzt werden, um lokale Rechte (insbesondere die Verwendung eines geheimen Schlüssels) freizuschalten. Das lokale Recht steht nur dann zur Verfügung, falls der korrekte Code ausgeführt wurde, d.h. wenn die Messungen des ausgeführten Codes zu einem zulässigen akkumulierten PCR-Wert geführt haben. Andererseits kann der Wert des PCRs mit Hilfe eines im Secure Element gespeicherten Schlüssels durch Signatur gegenüber einer dritten Partei attestiert werden. Die dritte Partei kann sich dann davon überzeugen, dass sich das Gerät in einem vertrauenswürdigen Betriebszustand befindet, insbesondere bevor sensible Daten an das Gerät übertragen werden.

Allerdings ermöglicht der Stand der Technik keine Aussage über die Integrität und Authentizität des korrekten Geräteaufbaus, wenn ein Gerät aus mehreren Subkomponenten aufgebaut ist, sobald Subkomponenten des Geräts ausgetauscht wurden. Dies ist speziell bei längeren Nutzungsdauern problematisch.

Die Aufgabe der Erfindung besteht darin, einen Geräteaufbau für eine verbesserte Langzeittauglichkeit bereitzustellen.

Die Patentanmeldungen EP 3 599 567 A1, WO 2020/185568 A1 und EP 3 591 559 A1 beschreiben ebenfalls relevanten Stand der Technik.

ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen.

Die Erfindung betrifft ein Verfahren zum Ausgeben einer gemeinsamen, kryptographisch geschützten Gerätekonfigurationsinformation von mindestens einer ersten Komponente eines Geräts und mindestens einer zweiten Komponente des Geräts, wobei die erste Komponente eine erste Konfiguration aufweist und die zweite Komponente eine zweite Konfiguration aufweist.

Das Verfahren weist die folgenden Schritte auf:

- Ein Empfangen einer zweiten Konfigurationsinformation durch die mindestens eine erste Komponente, wobei die zweite Konfigurationsinformation eine kryptographische Signatur aufweist und die zweite Konfiguration beschreibt,
- Ein Prüfen der kryptographischen Signatur durch ein erstes Sicherheitselement der mindestens einen ersten Komponente,
- Ein Erstellen einer gemeinsamen kryptographisch geschützten Gerätekonfigurationsinformation unter Einbezug der zweiten Konfigurationsinformation und einer ersten Konfigurationsinformation durch das erste Sicherheitselement in Abhängigkeit von einem Ergebnis des Prüfens der kryptographischen Signatur, wobei die erste Konfigurationsinformation die erste Konfiguration beschreibt und

- Ein Ausgeben der gemeinsamen, kryptographisch geschützten Gerätekonfigurationsinformation durch das erste Sicherheitselement.

Ein Aspekt der Erfindung besteht somit darin, kryptographisch geschützte Informationen verschiedener Sicherheitselemente der Komponenten bzw. Teilkomponenten innerhalb des Geräts sicher zu einer Gesamtaussage über die Integrität des gesamten Geräts zu verbinden. Dabei kann eine Mehrzahl von zweiten Konfigurationsinformationen von dem ersten Sicherheitselement der ersten Komponente empfangen und geprüft werden, und es kann eine gemeinsame kryptographisch geschützte Gerätekonfigurationsinformation unter Einbezug der Mehrzahl von zweiten Konfigurationsinformationen der Mehrzahl von zweiten Komponenten durch das erste Sicherheitselement erstellt und kryptographisch geschützt ausgegeben werden.

Die Grundidee der Erfindung besteht somit darin, dass abhängig von der aktuellen Konfiguration der Komponenten des Geräts, eines der mehreren Sicherheitselemente der Komponenten als das Sicherheitselement festgelegt wird, welches das Gerät gegenüber der Außenwelt repräsentiert.

Unter einer Repräsentation gegenüber der Außenwelt ist insbesondere zu verstehen, dass das festgelegte Sicherheitselement eine Gerätekonfigurationsinformation kryptographisch geschützt nach extern bereitstellt, auch als Attestierung bezeichenbar, wobei die kryptographisch geschützte Gerätekonfigurationsinformation abhängig von signierten Gerätekonfigurationsinformation der einzelnen Komponenten ermittelt wird, die von mehreren Sicherheitselementen des Geräts verwaltet werden.

Das Sicherheitselement, auch als Secure Element bezeichenbar, ist eine hardwarebasierte oder hardwaregebundene Sicherheitseinrichtung.

In einer Weiterbildung der Erfindung weist das Verfahren den weiteren Schritt auf:

- Ein Definieren der mindestens einen ersten Komponente des Geräts.

Hierdurch wird definiert, welche Komponente der Mehrzahl von Komponenten des Geräts und damit deren Sicherheitselement das Gerät nach extern bzw. nach außen repräsentiert und die gemeinsame, kryptographisch geschützte Gerätekonfigurationsinformation ausgibt.

In einer weiteren Weiterbildung der Erfindung wird die mindestens eine erste Komponente durch eine Nutzereingabe definiert.

Gemäß dieser Weiterbildung kann ein Anwender, auch Nutzer, insbesondere im Rahmen eines Engineerings oder einer Inbetriebnahme oder einer Gerätewartung, festlegen, welche Komponente das Gerät gegenüber der Außenwelt repräsentiert. Das bedeutet, dass ein Anwender festlegen, d.h. definieren, kann, welches der Sicherheitselemente, auch als Secure Elements bezeichenbar, das Gerät als erstes Sicherheitselement nach außen repräsentiert, insbesondere durch eine von diesem Sicherheitselement gebildete kryptographisch geschützte Attestierung, die abhängig von der durch das zweite Sicherheitselement zumindest einer anderen Komponente des Geräts verwalteten Konfigurationsinformation (insbesondere in einem Platform Configuration Register PCR verwaltet) gebildet wird.

Dadurch kann insbesondere ein wechselbares Kommunikationsmodul des Geräts (insbesondere ein Kommunikationsprozessor) ein Sicherheitselement bzw. Secure Element umfassen, das das Gerät als Ganzes nach Außen als erstes Sicherheitselement repräsentiert. Dieses kann insbesondere aktuelle starke kryptographische Algorithmen bei einer Attestierung unterstützen, z.B. RSA mit 4096 bit oder 8192 bit Schlüssellänge oder ein PO-Signaturverfahren (insbesondere CRYSTALS-DILITHIUM, FALCON, Rainbow). Ein anderes untergeordnetes Secure Element unterstützt dagegen insbesondere nur RSA mit 2048 bit oder 1024 bit Schlüssellänge.

Die Erfindung ermöglicht einem Anwender dadurch, flexibel durch eine wechselbare Subkomponente ein kryptographisch starkes Secure Element, das insbesondere in einem Kommunikationsprozessor realisiert oder enthalten ist, statt eines in einer anderen Gerätekomponente enthalten Secure Elements zu verwenden, d.h. als erstes Sicherheitselement zu definieren.

Ein Anwender kann dies in einer Variante über eine projektierbare Gerätekonfiguration festlegen, d.h. das erste Sicherheitselement über eine projektierbare Gerätekonfiguration definieren. Das bedeutet, dass der Anwender über eine projektierbare Gerätekonfiguration definieren kann, welches der Mehrzahl von Sicherheitselementen des Geräts als erstes Sicherheitselement nach Extern repräsentiert. Andere Sicherheitselemente des Geräts werden dann als zweites Sicherheitselement verwendet.

In einer weiteren Weiterbildung der Erfindung wird die mindestens eine erste Komponente durch

- deren topologische Position innerhalb des Geräts oder
- eine Adresse der ersten Komponente definiert.

In dieser weiteren Variante kann der Anwender die erste Komponente implizit festlegen und damit deren Sicherheitselement als erstes Sicherheitselement definieren, insbesondere durch die topologische Position (insbesondere verwendeter Stecksockel und/oder Reihenfolge von mehreren angesteckten Subkomponenten) oder eine vergebene Adresse einer Subkomponente festlegen.

In einer weiteren Weiterbildung der Erfindung wird die mindestens eine erste Komponente zufällig oder pseudozufällig definiert.

In dieser weiteren Variante wird die erste Komponente und damit das erste Sicherheitselement, welches das Gerät gegenüber der Außenwelt repräsentiert, zufällig oder pseudozufällig ausgewählt. Dazu kann ein Leader-Election-Protokoll verwendet werden. Weiterhin ist es möglich, die erste Komponente und damit das erste Sicherheitselement abhängig von einem Ordnungskriterium der jeweiligen Komponente bzw. des jeweiligen Sicherheitselements zu ermitteln. Beispielsweise kann die Komponente bzw. das Sicherheitselement mit dem größten oder kleinsten Ordnungskriterium als erste Komponente bzw. als erstes Sicherheitselement automatisch definiert werden. Als Ordnungskriterium kann z.B. die Seriennummer oder ein Public-Key-Hash-Wert der Komponente bzw. Des Sicherheitselements verwendet werden.

In einer weiteren Weiterbildung der Erfindung wird die mindestens eine erste Komponente in Abhängigkeit deren Funktionalität und/oder eines vorgegebenen Schutzniveaus definiert.

In dieser Ausführungsform ist es möglich, ein Sicherheitselement abhängig von der Funktionalität und der unterstützten kryptographischen Stärke der vorhandenen Sicherheitselemente oder der Stärke eines physikalischen Tamper-Schutzes automatisch auszuwählen und als das erste Sicherheitselement zu definieren. Dadurch kann das kryptographisch stärkste, am besten geeignete Sicherheitselement automatisch ermittelt werden. Weiterhin kann dadurch bei einem gegebenenfalls auftretenden Ausfall oder einem Defekt eines einzelnen Sicherheitselements automatisch ein anderes Sicherheitselement als das erste Sicherheitselement ausgewählt und definiert werden, das das Gerät gegenüber der Außenwelt repräsentiert.

In einer weiteren Weiterbildung der Erfindung wird die mindestens eine erste Komponente während einem Einsatz des Geräts definiert. Dies hat den Vorteil, dass die erste Komponente dynamisch festgelegt und geändert werden kann und das Gerät so an die Einsatzrahmenbedingungen adaptierbar ist. Die automatische Definition kann z.B. bei einem Gerätehochlauf oder bei einer Änderung einer Gerätekonfiguration angestoßen werden.

In einer weiteren Variante wird die mindestens eine erste Komponente dynamisch durch einen externen Empfänger einer Attestierung festgelegt, bspw. als Teil eines eingesetzten Protokolls zur Attestation. Dies hat den Vorteil, dass der Empfänger ein Sicherheitselement auswählen kann, das seinen Anforderungen hinsichtlich Vertrauenswürdigkeit am besten entspricht.

In einer weiteren Weiterbildung der Erfindung ist die mindestens eine erste Komponente und/oder die mindestens eine zweite Komponente als:

- eine Programmable Logic Controller (PLC) und/oder
- ein Smart Aktuator und/oder
- ein Smart Sensor und/oder
- ein Erweiterungsmodul und/oder
- ein IO-Modul und/oder
- ein AI-Modul und/oder
- ein Kommunikationsprozessor ausgebildet.

In einer weiteren Weiterbildung der Erfindung weist die mindestens eine zweite Komponente ein zweites Sicherheitselement auf. Dies hat den Vorteil, dass während der Anwendung auch die zweite Komponente und damit das zweite Sicherheitselement als jenes gewählt werden kann, welches die gemeinsame, kryptographisch geschützte Gerätekonfigurationsinformation ausgibt. Speziell ist es möglich, dass jede Komponente des Geräts oder nur ein Teil der Komponenten über ein eigenes Sicherheitselement verfügt.

In einer weiteren Weiterbildung der Erfindung basiert die kryptographische Signatur der zweiten Konfigurationsinformation auf einem kryptographischen Schlüsselpaar, und ein öffentlicher Schlüssel des Schlüsselpaars wird der ersten Komponente zur Verfügung gestellt.

Die Erfindung umfasst außerdem ein Gerät aufweisend mindestens eine erste Komponente und mindestens eine zweite Komponente, wobei die erste Komponente ausgebildet ist, das erfindungsgemäße Verfahren auszuführen.

In einer Weiterbildung der Erfindung weist die erste Komponente des Geräts eine erste Konfiguration auf und die zweite Komponente eine zweite Konfiguration, wobei die erste Komponente aufweist:

- eine Empfangseinheit, ausgebildet eine zweite Konfigurationsinformation zu empfangen, wobei die zweite Konfigurationsinformation eine kryptographische Signatur aufweist und die zweite Konfiguration beschreibt,
- ein erstes Sicherheitselement,

- ausgebildet, die kryptographische Signatur zu prüfen, und
- außerdem ausgebildet, eine gemeinsame kryptographisch geschützte Gerätekonfigurationsinformation unter Einbezug der zweiten Konfigurationsinformation und einer ersten Konfigurationsinformation in Abhängigkeit von einem Ergebnis des Prüfens der kryptographischen Signatur zu erstellen, wobei die erste Konfigurationsinformation die erste Konfiguration beschreibt, und

- eine Ausgabeeinheit, ausgebildet eine gemeinsame, kryptographisch geschützte Gerätekonfigurationsinformation auszugeben, wobei die gemeinsame, kryptographisch geschützte Gerätekonfigurationsinformation die mindestens eine erste Komponente des Geräts und die mindestens eine zweite Komponente des Geräts betrifft.

Die Erfindung umfasst außerdem ein Computerprogrammprodukt, umfassend ein Computerprogramm, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

Die Erfindung umfasst außerdem ein computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

Zusammengefasst bietet die Erfindung den Vorteil einer erhöhten Flexibilität, da unterschiedliche Secure Elements eines Geräts flexibel genutzt werden können, was wiederum die Langzeittauglichkeit verbessert. Ein Anwender kann dadurch ein Gerät, insbesondere ein industrielles Steuergerät oder ein industrielles Überwachungsgerät, über einen langen Zeitraum sicher verwenden, da selbst die Hardware-basierte Geräte-Security-Funktionalität aktualisierbar sein kann.

## KURZE BESCHREIBUNG DER ZEICHNUNGEN

Die Besonderheiten und Vorteile der Erfindung werden aus den nachfolgenden Erläuterungen mehrerer Ausführungsbeispiele anhand der schematischen Zeichnungen ersichtlich.

Es zeigen

Fig. 1    ein Ablaufdiagramm des erfindungsgemäßen Verfahrens und

Fig. 2    eine schematische Darstellung eines erfindungsgemäßen Geräts.

## DETAILLIERTE BESCHREIBUNG DER ERFINDUNG

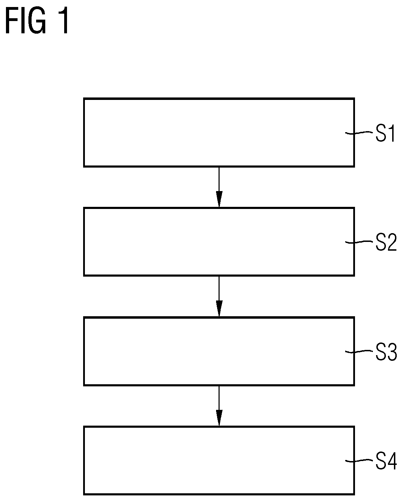

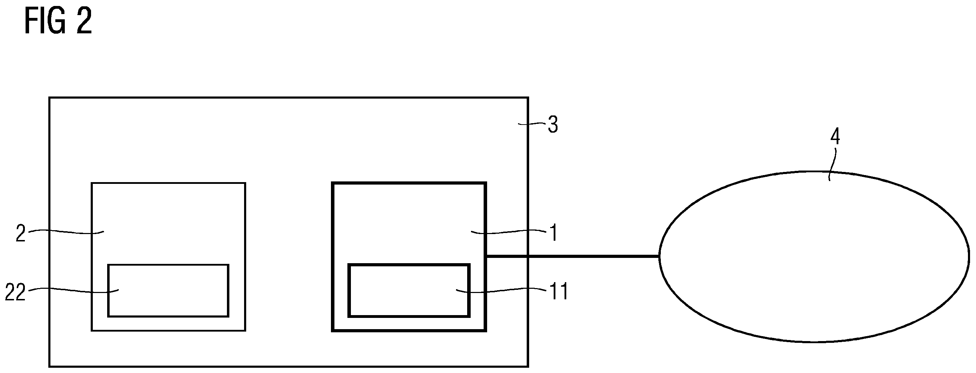

Fig. 1 zeigt ein Ablaufdiagramm des erfindungsgemäßen Verfahrens zum Ausgeben einer gemeinsamen, kryptographisch geschützten Gerätekonfigurationsinformation von mindestens einer ersten Komponente 1 (siehe Fig. 2) eines Geräts 3 (siehe Fig. 2) und mindestens einer zweiten Komponente 2 (siehe Fig. 2) des Geräts 3, wobei die erste Komponente 1 eine erste Konfiguration aufweist und die zweite Komponente 2 eine zweite Konfiguration aufweist.

Das Verfahren weist aus Sicht der ersten Komponente die folgenden Schritte auf:

- Schritt S1: Ein Empfangen einer zweiten Konfigurationsinformation durch die mindestens eine erste Komponente 1, wobei die zweite Konfigurationsinformation eine kryptographische Signatur aufweist und die zweite Konfiguration beschreibt,
- Schritt S2: Ein Prüfen der kryptographischen Signatur durch ein erstes Sicherheitselement 11 der mindestens einen ersten Komponente 1,
- Schritt S3: Ein Erstellen einer gemeinsamen kryptographisch geschützten Gerätekonfigurationsinformation unter Einbezug der zweiten Konfigurationsinformation und einer ersten Konfigurationsinformation durch das erste Sicherheitselement 11 in Abhängigkeit von einem Ergebnis des Prüfens der kryptographischen Signatur, wobei die erste Konfigurationsinformation die erste Konfiguration beschreibt und
- Schritt S4: Ein Ausgeben der gemeinsamen, kryptographisch geschützten Gerätekonfigurationsinformation durch das erste Sicherheitselement 11.

Vorab kann ein Erzeugen der zweiten Konfigurationsinformation durch die zweite Komponente vorgenommen werden. Dies ist ein Schritt aus Sicht der zweiten Komponente.

Fig. 2 zeigt ein Gerät 3 aufweisend die mindestens eine erste Komponente 1 und die mindestens eine zweite Komponente 2, wobei die erste Komponente ausgebildet ist, ein Verfahren wie in Fig. 1 dargestellt auszuführen.

Die erste Komponente 1 weist eine erste Konfiguration auf und die zweite Komponente 2 weist eine zweite Konfiguration auf. Die erste Komponente weist die folgenden Einheiten auf:

- eine Empfangseinheit, ausgebildet eine zweite Konfigurationsinformation zu empfangen, wobei die zweite Konfigurationsinformation eine kryptographische Signatur aufweist und die zweite Konfiguration beschreibt,
- ein erstes Sicherheitselement 11,

  - ausgebildet, die kryptographische Signatur zu prüfen, und
  - außerdem ausgebildet, eine gemeinsame kryptographisch geschützte Gerätekonfigurationsinformation unter Einbezug der zweiten Konfigurationsinformation und einer ersten Konfigurationsinformation in Abhängigkeit von einem Ergebnis des Prüfens der kryptographischen Signatur zu erstellen, wobei die erste Konfigurationsinformation die erste Konfiguration beschreibt und

- eine Ausgabeeinheit, ausgebildet eine gemeinsame, kryptographisch geschützte Gerätekonfigurationsinformation auszugeben, wobei die gemeinsame, kryptographisch geschützte Gerätekonfigurationsinformation die mindestens eine erste Komponente 1 des Geräts 3 und die mindestens eine zweite Komponente 2 des Geräts 3 betrifft.

Fig. 2 zeigt im speziellen ausgedrückt ein Gerät 3, welches aus zwei Komponenten, **d.h.** zwei Subkomponenten, 1, 2 (allgemein aus mehreren Subkomponenten) aufgebaut ist, insbesondere eine PLC (engl. "Programmable Logic Controller") und einen Smart Aktuator oder Smart Sensor oder ein Erweiterungsmodul, insbesondere ein IO-Modul, ein AI-Modul oder ein Kommunikationsprozessor. Vorzugsweise jede Subkomponente verfügt über ein Secure Element 11, 22, das insbesondere zum oder beim Schutz des Boot-Vorgangs der jeweiligen Subkomponente 1, 2 verwendet wird. Im Beispiel übernimmt Subkomponente 1 die Repräsentation des Geräts nach außen und gibt die gemeinsame, kryptographisch geschützte Gerätekonfigurationsinformation aus. Die Komponenten 1, 2 des Geräts 3 können fest oder lösbar mit dem Gerät 3 verbunden sein. Das Sicherheitselement 11 des Komponente 1 ist vorzugsweise fest mit der Komponente 1 verbunden beziehungsweise in diese integriert. Entsprechend ist das Sicherheitselement 22 der Komponente 2 vorzugsweise fest mit der Komponente 2 verbunden beziehungsweise in diese integriert. Der öffentliche Schlüssel des zweiten Sicherheitselements 22 liegt auf dem ersten Sicherheitselement 11 vor, sodass das erste Sicherheitselement 11 eine vom zweiten Sicherheitselement mit dem zugeordneten privaten Schlüssel gebildete Signatur prüfen kann. Somit kann das erste Sicherheitselement 11 die Gültigkeit der von der zweiten Komponente 2 gebildeten und bereitgestellten kryptographisch geschützten zweiten Konfigurationsinformation der zweiten Komponente prüfen. In einer Variante kann die gemeinsame, kryptographisch geschützte Gerätekonfigurationsinformation den öffentlichen Schlüssel des zweiten Sicherheitselements 22 umfassen oder referenzieren, z.B. durch Angabe eines kryptographischen Hash-Werts des öffentlichen Schlüssels des zweiten Sicherheitselements 22.

Eine Möglichkeit, dies mit den vom TPM zur Verfügung gestellten Mitteln zu realisieren, ist, dass die Firmware von Subkomponente 1 im Rahmen des Boot-Prozesses von Subkomponente 1 einen PCR-Wert von Subkomponente 2 abfragt und diesen mit in einen eigenen PCR-Wert aufnimmt:

```
PCR_sub1_value_new =
hash_func(PCR_sub1_value_old | PCR_sub2_value)
```

PCR_sub1_value_new kann nun entweder weiter expandiert werden, oder direkt entweder zur Freigabe lokaler Rechte oder zur Remote-Attestation verwendet werden.

Gemäß eines weiteren erfindungsgemäßen Aspekts kann die Sicherheit des Verfahrens wie folgt verbessert werden: Ein Sicherheitselement 11, 22 bietet dazu eine spezielle Extend-Funktion, die ausschließlich signierte Prüfsummen akzeptiert. Das Control Register wird erst nach erfolgreicher Verifikation der Signatur erweitert:

```
PCR_value_new =
verify_and_hash_func(PCR_value_old | digest, digest_sig)
```

Der zusätzliche Parameter digest_sig enthält eine Signatur über den Parameter digest. Der zur Verifikation benötigte öffentliche Schlüssel muss dem jew. Secure Element 11, 22, das die Funktion verify_and_hash_func ausführen soll, vorab über einen sicheren Kommunikationsweg, z.B. einem sicheren Kanal (secure channel), zur Verfügung gestellt werden.

Falls nicht alle benötigten Prüfsummen mit einer Signatur vorliegen, können ggf. zwei PCR Werte parallel aufgebaut werden, einer ausschließlich über hash_func, der andere über verify_and_hash_func. Beide PCRs können dann entweder unabhängig voneinander oder in einem gemeinsamen Verfahren attestiert werden.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

**Patentansprüche**

1.  Verfahren zum Ausgeben einer gemeinsamen, kryptographisch geschützten Gerätekonfigurationsinformation von mindestens einer ersten Komponente (1) eines Geräts (3) und mindestens einer zweiten Komponente (2) des Geräts (3), wobei die erste Komponente (1) eine erste Konfiguration aufweist und die zweite Komponente (2) eine zweite Konfiguration aufweist, wobei die mindestens eine erste Komponente (1) definiert wurde durch:

    - eine Nutzereingabe,

    mit den Schritten:

    - Ein Empfangen einer zweiten Konfigurationsinformation durch die mindestens eine erste Komponente (1), wobei die zweite Konfigurationsinformation eine kryptographische Signatur aufweist, und die zweite Konfiguration beschreibt,
    - Ein Prüfen der kryptographischen Signatur durch ein erstes Sicherheitselement (11) der mindestens eine erste Komponente,
    - Ein Erstellen einer gemeinsamen kryptographisch geschützten Gerätekonfigurationsinformation unter Einbezug der zweiten Konfigurationsinformation und einer ersten Konfigurationsinformation durch das erste Sicherheitselement (11) in Abhängigkeit von einem Ergebnis des Prüfens der kryptographischen Signatur, wobei die erste Konfigurationsinformation die erste Konfiguration beschreibt und
    - Ein Ausgeben der gemeinsamen, kryptographisch geschützten Gerätekonfigurationsinformation durch das erste Sicherheitselement (11).

2.  Verfahren nach Anspruch 1,
    wobei die mindestens eine erste Komponente (1) außerdem durch

    - deren topologische Position innerhalb des Geräts (3) oder
    - eine Adresse der ersten Komponente (1) definiert wird.

3.  Verfahren nach einem der vorhergehenden Ansprüche,
    wobei die mindestens eine erste Komponente (1) außerdem zufällig oder pseudozufällig definiert wird.

4.  Verfahren nach einem der vorhergehenden Ansprüche,
    wobei die mindestens eine erste Komponente (1) außerdem in Abhängigkeit deren Funktionalität und/oder eines vorgegebenen Schutzniveaus definiert wird.

5.  Verfahren nach einem der vorhergehenden Ansprüche,
    wobei die mindestens eine erste Komponente (1) außerdem während einem Einsatz des Geräts (3) definiert wird.

6.  Verfahren nach einem der vorhergehenden Ansprüche,
    wobei die mindestens eine erste Komponente (1) und/oder die mindestens eine zweite Komponente (2) als:

    - eine Programmable Logic Controller und/oder
    - ein Smart Aktuator und/oder
    - ein Smart Sensor und/oder
    - ein Erweiterungsmodul und/oder
    - ein IO-Modul und/oder
    - ein AI-Modul und/oder
    - ein Kommunikationsprozessor ausgebildet ist.

7.  Verfahren nach einem der vorhergehenden Ansprüche,
    wobei die mindestens eine zweite Komponente (2) ein zweites Sicherheitselement (22) aufweist.

**8.** Verfahren nach einem der vorhergehenden Ansprüche,
wobei die kryptographische Signatur der zweiten Konfigurationsinformation auf einem kryptographischen Schlüsselpaar basiert und ein öffentlicher Schlüssel des Schlüsselpaars der ersten Komponente (1) zur Verfügung gestellt wird.

**9.** Gerät aufweisend mindestens eine erste Komponente (1) und mindestens eine zweite Komponente (2), wobei die erste Komponente (1) ausgebildet ist, ein Verfahren nach einem der Ansprüche 1 bis 8 auszuführen.

**10.** Gerät nach Anspruch 9,

wobei die erste Komponente (1) eine erste Konfiguration aufweist und die zweite Komponente (2) eine zweite Konfiguration aufweist,
wobei die erste Komponente (1) aufweist:

- eine Empfangseinheit, ausgebildet eine zweite Konfigurationsinformation zu empfangen, wobei die zweite Konfigurationsinformation eine kryptographische Signatur aufweist und die zweite Konfiguration beschreibt,
- ein erstes Sicherheitselement (11),

- ausgebildet, die kryptographische Signatur zu prüfen, und
- außerdem ausgebildet, eine gemeinsame kryptographisch geschützte Gerätekonfigurationsinformation unter Einbezug der zweiten Konfigurationsinformation und einer ersten Konfigurationsinformation in Abhängigkeit von einem Ergebnis des Prüfens der kryptographischen Signatur zu erstellen, wobei die erste Konfigurationsinformation die erste Konfiguration beschreibt und

- eine Ausgabeeinheit, ausgebildet eine gemeinsame, kryptographisch geschützte Gerätekonfigurationsinformation auszugeben, wobei die gemeinsame, kryptographisch geschützte Gerätekonfigurationsinformation die mindestens eine erste Komponente (1) des Geräts (3) und die mindestens eine zweite Komponente (2) des Geräts (3) betrifft.

**11.** Computerprogrammprodukt, umfassend ein Computerprogramm, wobei das Computerprogramm in eine Speichereinrichtung einer Recheneinheit ladbar ist, wobei mit dem Computerprogramm die Schritte eines Verfahrens nach einem der Ansprüche 1 bis 8 ausgeführt werden, wenn das Computerprogramm auf der Recheneinheit ausgeführt wird.

**12.** Computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines Verfahrens nach einem der Ansprüche 1 bis 8 ausgeführt werden, wenn das Computerprogramm auf der Recheneinheit ausgeführt wird.

**Claims**

**1.** Method for outputting a common, cryptographically protected device configuration information item from at least one first component (1) of a device (3) and at least one second component (2) of the device (3), the first component (1) having a first configuration and the second component (2) having a second configuration, the at least one first component (1) having been defined by:

- a user input,
comprising the steps of:
- the at least one first component (1) receiving a second configuration information item, the second configuration information item having a cryptographic signature and describing the second configuration,
- a first security element (11) of the at least one first component checking the cryptographic signature,
- the first security element (11) generating a common cryptographically protected device configuration information item in consideration of the second configuration information item and a first configuration information item on the basis of a result of the checking of the cryptographic signature, the first configuration information item describing the first configuration, and
- the first security element (11) outputting the common, cryptographically protected device configuration information item.

**2.** Method according to Claim 1,
the at least one first component (1) additionally being defined by

- the topological position thereof within the device (3) or
- an address of the first component (1)

**3.** Method according to either of the preceding claims,
the at least one first component (1) additionally being defined randomly or pseudo-randomly.

**4.** Method according to one of the preceding claims,
the at least one first component (1) additionally being defined on the basis of the functionality thereof and/or a specified protection level.

**5.** Method according to one of the preceding claims,
the at least one first component (1) additionally being defined during use of the device (3).

**6.** Method according to one of the preceding claims,
the at least one first component (1) and/or the at least one second component (2) being in the form of:

- a programmable logic controller and/or
- a smart actuator and/or
- a smart sensor and/or
- an expansion module and/or
- an IO module and/or
- an AI module and/or
- a communication processor

**7.** Method according to one of the preceding claims,
the at least one second component (2) comprising a second security element (22).

**8.** Method according to one of the preceding claims,
the cryptographic signature of the second configuration information item being based on a cryptographic key pair, and a public key of the key pair being made available to the first component (1).

**9.** Device comprising at least one first component (1) and at least one second component (2), the first component (1) being designed to carry out a method according to one of Claims 1 to 8.

**10.** Device according to Claim 9,

the first component (1) having a first configuration and the second component (2) having a second configuration, the first component (1) comprising:

- a receiving unit, designed to receive a second configuration information item, the second configuration information item having a cryptographic signature and describing the second configuration,
- a first security element (11),
- designed to check the cryptographic signature, and
- additionally designed to generate a common cryptographically protected device configuration information item in consideration of the second configuration information item and a first configuration information item on the basis of a result of the checking of the cryptographic signature, the first configuration information item describing the first configuration, and
- an output unit, designed to output a common, cryptographically protected device configuration information item, the common, cryptographically protected device configuration information item relating to the at least one first component (1) of the device (3) and the at least one second component (2) of the device (3).

**11.** Computer program product comprising a computer program, the computer program being able to be loaded into a memory device of a computing unit, the computer program being used to perform the steps of a method according to one of Claims 1 to 8 when the computer program is executed on the computing unit.

12. Computer-readable medium on which a computer program is stored, the computer program being able to be loaded into a memory device of a computing unit, the computer program being used to perform the steps of a method according to one of Claims 1 to 8 when the computer program is executed on the computing unit.

**Revendications**

1. Procédé destiné à l'émission d'informations de configuration d'appareil communes, protégées de manière cryptographique d'au moins un premier composant (1) d'un appareil (3) et d'au moins un second composant (2) de l'appareil (3), dans lequel le premier composant (1) présente une première configuration et le second composant (2) présente une seconde configuration, dans lequel l'au moins un premier composant (1) a été défini par le biais :

   - d'une entrée utilisateur,

   avec les étapes :

   - de réception d'une seconde information de configuration par le biais de l'au moins un premier composant (1), dans lequel la seconde information de configuration présente une signature cryptographique et décrit la seconde configuration,
   - de vérification de la signature cryptographique par le biais d'un premier élément de sécurité (11) de l'au moins un premier composant,
   - de création d'une information de configuration d'appareil commune protégée de manière cryptographique en prenant en compte la seconde information de configuration et une première information de configuration par le biais du premier élément de sécurité (11) en fonction d'un résultat de la vérification de la signature cryptographique, dans lequel la première information de configuration décrit la première configuration et
   - d'émission de l'information de configuration d'appareil commune protégée de manière cryptographique par le biais du premier élément de sécurité (11).

2. Procédé selon la revendication 1, dans lequel l'au moins un premier composant (1) est défini en outre par le biais

   - de sa position topologique au sein de l'appareil (3) ou
   - d'une adresse du premier composant (1).

3. Procédé selon l'une quelconque des revendications précédentes, dans lequel l'au moins un premier composant (1) est défini en outre de manière aléatoire ou pseudo-aléatoire.

4. Procédé selon l'une quelconque des revendications précédentes, dans lequel l'au moins un premier composant (1) est défini en outre en fonction de sa fonctionnalité et/ou d'un niveau de protection prédéterminé.

5. Procédé selon l'une quelconque des revendications précédentes, dans lequel l'au moins un premier composant (1) est défini en outre pendant une utilisation de l'appareil (3).

6. Procédé selon l'une quelconque des revendications précédentes, dans lequel l'au moins un premier composant (1) et/ou l'au moins un second composant (2) sont formés en tant :

   - que contrôleur logique programmable et/ou
   - qu'actionneur intelligent et/ou
   - que capteur intelligent et/ou
   - que module d'extension et/ou
   - que module ES et/ou
   - que module IA et/ou
   - que processeur de communication.

7. Procédé selon l'une quelconque des revendications précédentes, dans lequel l'au moins un second composant (2) présente un second élément de sécurité (22).

8. Procédé selon l'une quelconque des revendications précédentes, dans lequel la signature cryptographique de la seconde information de configuration est basée sur une paire de clés cryptographiques et une clé publique de la paire de clés du premier composant (1) est fournie.

9. Appareil présentant au moins un premier composant (1) et au moins un second composant (2), dans lequel le premier composant (1) est formé pour réaliser un procédé selon l'une quelconque des revendications 1 à 8.

10. Appareil selon la revendication 9, dans lequel le premier composant (1) présente une première configuration et le second composant (2) présente une seconde configuration,
dans lequel le premier composant (1) présente :

- une unité de réception, formée pour recevoir une seconde information de configuration, dans lequel la seconde information de configuration présente une signature cryptographique et décrit la seconde configuration,
- un premier élément de sécurité (11)

- formé pour vérifier la signature cryptographique, et
- formé en outre pour créer une information de configuration d'appareil commune protégée de manière cryptographique en prenant en compte la seconde information de configuration et une première information de configuration en fonction d'un résultat de la vérification de la signature cryptographique, dans lequel la première information de configuration décrit la première configuration et
- une unité d'émission, formée pour émettre une information de configuration d'appareil commune protégée de manière cryptographique, dans lequel l'information de configuration d'appareil commune protégée de manière cryptographique concerne l'au moins un premier composant (1) de l'appareil (3) et l'au moins un second composant (2) de l'appareil (3).

11. Produit de programme informatique, comprenant un programme informatique, dans lequel le programme informatique peut être chargé dans un dispositif de mémoire d'une unité de calcul, dans lequel les étapes d'un procédé selon l'une quelconque des revendications 1 à 8 peuvent être réalisées avec le programme informatique lorsque le programme informatique est réalisé sur l'unité de calcul.

12. Support lisible par ordinateur, sur lequel un programme informatique est mis en mémoire, dans lequel le programme informatique peut être chargé dans un dispositif de mémoire d'une unité de calcul, dans lequel les étapes d'un procédé selon l'une quelconque des revendications 1 à 8 sont réalisées avec le programme informatique lorsque le programme informatique est réalisé sur l'unité de calcul.

FIG 1

## FIG 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3599567 A1
- WO 2020185568 A1
- EP 3591559 A1